# EUROPEAN PATENT APPLICATION

(11) **EP 4 072 242 A2**
(43) Date of publication of application: **12.10.2022**
(21) Application number: 22165704.2
(22) Date of filing: 30.03.2022
(51) Int. Cl.: H05B 3/14

(54) **HEATING APPARATUS**

(30) Priority: 05.04.2021 US 202163170723 P; 24.03.2022 US 202217702942
(71) Applicant: WHIRLPOOL CORPORATION, Benton Harbor Michigan 49022 (US)
(72) Inventor: Fraccon, Stefania, 21024 Cassinetta di Biandronno (VA) (IT); Khizar, Muhammad, 21024 Cassinetta di Biandronno (VA) (IT)
(74) Representative: Spina, Alessandro

(57) **Abstract**

A heating apparatus (10) includes a body (14), a chamber (18), and a thermal plate (38). The chamber (18) is defined by the body (14). The chamber (18) includes an upper region (30) and a lower region (34). The thermal plate (38) provides heat to the chamber (18). The thermal plate (38) includes a coating (42). The coating (42) includes a thermo-resistive layer (46). The thermo-resistive layer (46) includes a polymeric portion and a nanostructure portion. The thermal plate (38) is positioned in at least one location chosen from the upper region (30) and the lower region (34) of the chamber (18).

## Description

### BACKGROUND OF THE DISCLOSURE

The present disclosure generally relates to a heating apparatus. More specifically, the present disclosure relates to a heating apparatus that has a thermo-resistive layer.

### SUMMARY OF THE DISCLOSURE

According to one aspect of the present disclosure, a heating apparatus includes a body, a chamber, and a thermal plate. The chamber is defined by the body. The chamber includes an upper region and a lower region. The thermal plate provides heat to the chamber. The thermal plate includes a coating. The coating includes a thermo-resistive layer. The thermo-resistive layer includes a polymeric portion and a nanostructure portion. The thermal plate is positioned in at least one location chosen from the upper region and the lower region of the chamber.

According to another aspect of the present disclosure, a heating apparatus includes a body, a chamber, and a thermal plate. The chamber is defined by the body. The chamber includes an upper region and a lower region. The thermal plate provides heat to the chamber. The thermal plate includes a coating. The coating includes a thermo-resistive layer. The thermo-resistive layer includes a polymeric portion and a nanostructure portion. The thermo-resistive layer has a thickness that is between about 20 nm and about 60 nm. A thermal conductivity of the thermal plate is between about 0.20 W/mK and about 0.90 W/mK. The thermal plate is positioned in at least one location chosen from the upper region and the lower region of the chamber.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of a heating apparatus, illustrating a door of the heating apparatus in an open position, according to one example;
FIG. 2 is a front perspective view of the heating apparatus, illustrating the door of the heating apparatus in the open position, according to another example; and
FIG. 3 is a cross-sectional view of a thermal plate of the heating apparatus, taken along line III-III of FIG. 1, illustrating various layers of a coating of the thermal plate, according to one example.

The components in the figures are not necessarily to scale, emphasis instead being placed upon illustrating the principles described herein.

### DETAILED DESCRIPTION

The present illustrated embodiments reside primarily in combinations of method steps and apparatus components related to a heating apparatus. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

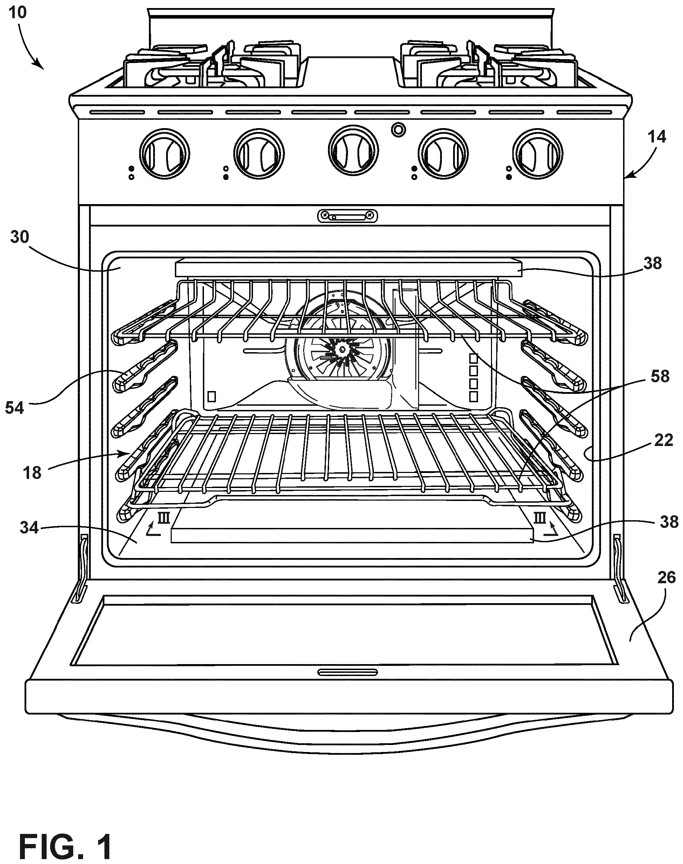

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

Referring to FIGS. 1-3, reference numeral 10 generally designates a heating apparatus. The heating apparatus 10 includes a body 14. The body 14 defines a chamber 18. In various examples, the body 14 can define an aperture 22. In such examples, the heating apparatus 10 can include a door 26 that is operable between an open position and a closed position. When in the closed position, the door 26 can cover an entirety of the aperture 22. The chamber 18 includes an upper region 30 and a lower region 34. The heating apparatus 10 includes a thermal plate 38 that is thermally coupled to the chamber 18. In some examples, the thermal coupling between the chamber 18 and the thermal plate 38 can take the form of the thermal plate 38 being positioned within the chamber 18. The thermal plate 38 provides heat to the chamber 18. The thermal plate 38 is provided with a coating 42. The coating 42 includes a thermo-resistive layer 46. The thermo-resistive layer 46 includes a polymeric portion and a nanostructure portion. The thermal plate 38 is positioned in at least one location chosen from the upper region 30 and the lower region 34 of the chamber 18. The heating apparatus 10 can be any appliance that employs a thermo-resistive heating element, such as the thermal plate 38, to heat matter (e.g., materials, gases, liquids). For example, the heating apparatus 10 can be, but is not limited to, ranges, wall ovens, stoves, air fryers, cooktops, refrigerators, dishwashers, clothes dryers, clothes washing machines, water heaters, space heaters, and so on.

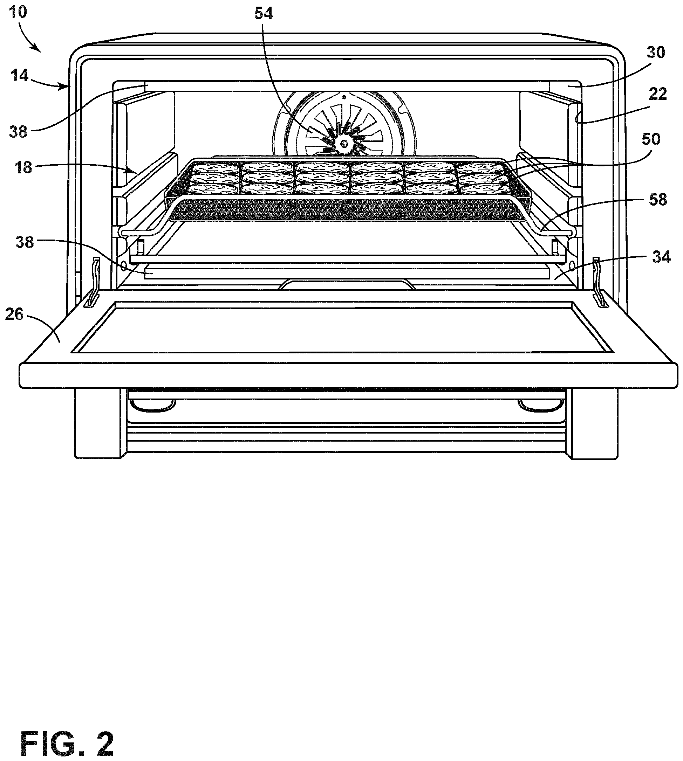

Referring again to FIGS. 1 and 2, the heating apparatus 10 is employed to heat matter. The heating apparatus 10 can be provided with a fan 54 that circulates air within the chamber 18, through the heating apparatus 10, and/or causes thermal energy or heat to be expelled from the chamber 18. The fan 54 can aid in more uniform distribution of heat within the chamber 18. In the depicted examples, the heating apparatus 10 is represented as an appliance that can be utilized in heating and/or cooking foodstuffs 50. In such examples, the chamber 18 can be configured to receive one or more shelves 58, upon which the foodstuff 50 may be suspended for heating and/or cooking purposes. As discussed above, the thermal plate 38 may be positioned in the upper region 30 and/or the lower region 34 of the chamber 18. In examples wherein the thermal plate 38 is installed in the upper region 30 of the chamber 18, it may be beneficial to include the fan 54 in an effort to distribute the heat generated at the thermal plate 38 throughout the chamber 18. For example, when the thermal plate 38 is installed solely in the upper region 30 of the chamber 18, heat generated by the thermal plate 38 may take a greater amount of time to reach the lower region 34 and thereby cause a thermal gradient to develop. This thermal gradient can lead to uneven and/or inconsistent heating and/or cooking conditions within the chamber 18. By employing the fan 54, the thermal gradient may be reduced, avoided, or dissipated. A similar thermal gradient may develop in examples where the thermal plate 38 is solely provided in the lower region 34 of the chamber 18. However, in such an example, the thermal gradient may be less pronounced due to the natural tendency of heated fluids (e.g., liquids and gasses) to rise. Nonetheless, employing the fan 54 in such an example can aid in even and repeatable heating and/or cooking of the foodstuff 50. In examples where the thermal plate 38 is provided in both the upper region 30 and the lower region 34, the thermal gradients generated by the upper thermal plate 38 and the lower thermal plate 38 may be inversely related to one another. Accordingly, in such an example, the thermal gradients may substantially counteract one another such that the fan 54 may be omitted. However, while the thermal gradients may be least pronounced in examples where the thermal plate 38 is provided in the upper region 30 and the lower region 34, the heating apparatus 10 may nonetheless benefit from the use of the fan 54 as the movement of the air within the chamber 18 can aid in reducing heating and/or cooking times.

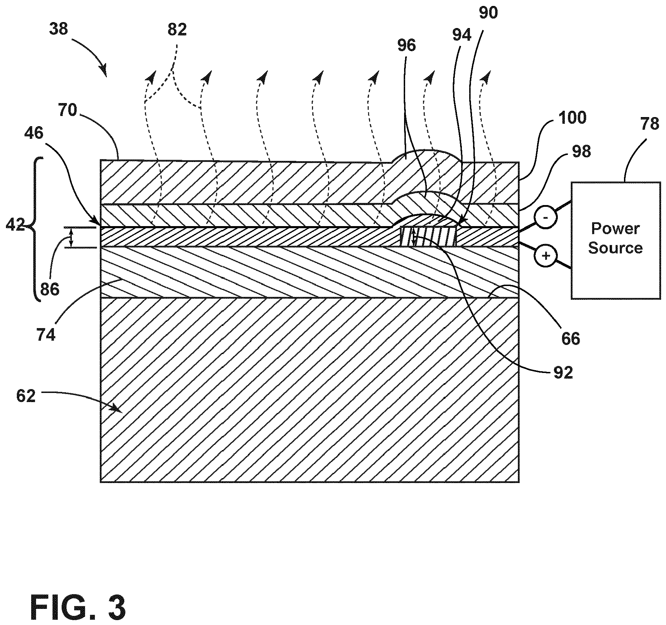

Referring now to FIG. 3, the thermal plate 38 includes a substrate 62. In various examples, the substrate 62 may be made of a metallic material. For example, the substrate 62 can include aluminum. The coating 42 is applied to a surface 66 of the substrate 62. The coating 42 may be applied to one surface of the substrate 62, applied to multiple surfaces of the substrate 62, or applied to an entire exterior surface of the substrate 62. As stated above, the coating 42 includes the thermo-resistive layer 46. An outermost layer of the coating 42 can provide a presented surface 70 of the thermal plate 38. The coating 42 and/or the thermo-resistive layer 46 can cover a substantial portion of the surface 66 of the substrate 62 such that a surface area of the presented surface 70 and a surface area of the surface 66 generally or substantially correspond with one another. The thermal plate 38 can be a continuous polygon in shape. For example, the thermal plate 38 can be a rectangular plate. In so dimensioning the thermal plate 38, it is possible to produce heat within the chamber 18 in a conformal or uniform manner. The coating 42 can include a primer layer 74 that is positioned between the substrate 62 and the thermo-resistive layer 46. The primer layer 74 is a copolymer-based material that is suitable for elevated temperature environments. The primer layer 74 aids in adherence of the coating 42 to the surface 66 of the substrate 62 and provides a degree of corrosion resistance. The primer layer 74 can adhere to the surface 66 of the substrate 62 with little to no preparation of the surface 66. Additionally, the primer layer 74 does not require a heated curing step after application.

Referring again to FIG. 3, the primer layer 74 can be in direct contact with the thermo-resistive layer 46. Accordingly, it can be beneficial for the material of the primer layer 74 to have a degree of heat resistance or heat tolerance. The thermo-resistive layer 46 is conductive and is electrically coupled to a power source 78. The power source 78 may be any source of electrical energy, including, but not limited to, an electrical grid, a household outlet (e.g., 110 volt outlet), a battery, a solar panel, a wind turbine, and so on. The coupling between the power source 78 and the thermo-resistive layer 46 may be direct or indirect. For example, the thermo-resistive layer 46 can receive power from the power source 78 through a power cord that is directly coupled to the heating apparatus 10. Alternatively, the thermo-resistive layer 46 can receive power from the power source 78 indirectly (e.g., inductively). The nanostructure portion of the thermo-resistive layer 46 can provide a degree of resistance to electrical conductivity. This resistance to electrical conductivity is harnessed as a source of thermal energy for providing heat to the chamber 18. In various examples, the thermo-resistive layer 46 can have a resistance in the range of about 30,000 ohms to about 60,000 ohms when operated at 110 volts. For example, the thermo-resistive layer 46 can have a resistance when operated at 110 volts of about 30,000 ohms, about 35,000 ohms, about 40,000 ohms, about 45,000 ohms, about 50,000 ohms, about 55,000 ohms, about 60,000 ohms, and/or combinations or ranges thereof. In some examples, the thermo-resistive layer 46 can reach a temperature of at least 350°C in less than two minutes from initially receiving power from the power source 48. For example, within two minutes of initially receiving power from the power source 78, the thermo-resistive layer 46 can reach a temperature of at least 200°C, at least 250°C, at least 300°C, at least 350°C, at least 400°C, or at least 450°C. That is, the thermo-resistive layer 46 can increase in temperature from an ambient temperature (e.g., 20°C) to a temperature of at least 200°C, at least 250°C, at least 300°C, at least 350°C, at least 400°C, or at least 450°C in less than two minutes. This rapid heating can be beneficial in foodstuff 50 cooking or foodstuff 50 heating examples of the heating apparatus 10 in an effort to produce a crisp layer on the foodstuff 50 by employing browning reactions of carmelization and the Millard reaction. Depending on the ingredients used in the foodstuff 50, a carmelization temperature of the foodstuff 50 can vary. However, carmelization temperatures are often in the range of about 110°C to about 180°C. Rapidly heating the thermo-resistive layer 46 to a temperature above the typical range of carmelization temperatures aids in heating and/or cooking the foodstuff 50 to the carmelization temperature in a shorter period of time. A thermal conductivity of the thermal plate 38 and/or the thermo-resistive layer 46 can be between about 0.20 W/mK and about 0.90 W/mK such that heat generated at the thermo-resistive layer 46 can be efficiently discharged, dissipated, or otherwise transferred to the chamber 18, as indicated by arrows 82.

Referring further to FIG. 3, the thermo-resistive layer 46 can have a thickness 86 that is between about 20 nm and about 60 nm. For example, the thickness 86 of the thermo-resistive layer 46 can be about 20 nm, about 25 nm, about 30 nm, about 35 nm, about 40 nm, about 45 nm, about 50 nm, about 55 nm, about 60 nm, and/or combinations or ranges thereof. The polymeric portion of the thermo-resistive layer 46 can include a two-part liquid silicone rubber. For example, the two-part liquid silicone rubber can include a first portion and a second portion, where the first portion and the second portion are mixed in a ten-to-one ratio (i.e., ten parts first portion to one part second portion). The two-part liquid silicone rubber can have a hardness on the Shore A Durometer scale of at least 40. The nanostructure portion of the thermo-resistive layer 46 can include graphene nano-platelets 90. The graphene nano-platelets can be distributed continuously throughout the thermo-resistive layer 46. Alternatively, the graphene nano-platelets 90 can be positioned at discrete locations within the thermo-resistive layer 46 (e.g., at regular intervals, positioned in a pattern, etc.). In examples where the graphene nano-platelets 90 are positioned at discrete locations within the thermo-resistive layer 46, the graphene nano-platelets 90 can be regularly positioned throughout the thermo-resistive layer 46. Regardless of whether the graphene nano-platelets 90 are intentionally positioned at discrete locations or distributed in a continuous manner as a result of bulk mixing or bulk application of the thermo-resistive layer 46, the thermo-resistive layer 46 can include regions that contain the graphene nano-platelets and regions that do not include the graphene nano-platelets 90. Similarly, the thermo-resistive layer 46 may include regions of greater density or concentration of the graphene nano-platelets 90 and region of lesser density or concentration of the graphene nano-platelets 90.

Referring still further to FIG. 3, a thickness 92 of the graphene nano-platelets 90 can be in the range of about 0.25 nm to about 12.5 nm. In some examples, the thickness 92 of the graphene nano-platelets 90 can be greater than the thickness 86 of the thermo-resistive layer 46 in regions of the thermo-resistive layer 46 that do not include the graphene nano-platelets 90. In various examples, regions of the thermo-resistive layer 46 that include the graphene nano-platelets 90 can result in a projection 94 in the thermo-resistive layer 46 of the polymeric portion of the thermo-resistive layer 46. This projection 94 can aid in radial dissipation of the heat generated at the thermo-resistive layer 46. When additional layers of the coating 42 are applied to a surface of the thermo-resistive layer 46 that is opposite to the primer layer 74, protuberances 96 can be propagated through the additional layer(s) as a result of the graphene nano-platelets 90. The graphene nano-platelets 90 can be present in the thermo-resistive layer 46 at a concentration of about 1.0% by weight to about 20% by weight. For example, the graphene nano-platelets 90 can be present in the thermo-resistive layer 46 at a concentration of about 1.0% by weight, about 1.5% by weight, about 2.0% by weight, about 2.5% by weight, about 3.0% by weight, about 3.5% by weight, about 4.0% by weight, about 4.5% by weight, about 5.0% by weight, about 10.0% by weight, about 15.0% by weight, about 20.0% by weight, and/or combinations or ranges thereof.

Referring again to FIG. 3, the coating 42 on the thermal plate 38 can include a barrier layer 98 that is positioned on a side of the thermo-resistive layer 46 that is opposite to the primer layer 74. Said another way, the thermo-resistive layer 46 can be positioned between the primer layer 74 and the barrier layer 98. The barrier layer 98 can prevent electricity applied to the thermo-resistive layer 46 from reaching the presented surface 70 of the coating 42. Accordingly, the barrier layer 98 can include a degree of electrical insulation to the coating 42. The barrier layer 98 can be made from a polyurethane material. The barrier layer 98 can have a dielectric breakdown voltage of between about 1,000 volts and 3,000 volts. In various examples, the barrier layer 98 can have a dielectric breakdown voltage of at least about 1,500 volts. The term dielectric breakdown voltage can be used to describe a minimum voltage that causes a portion of an insulator (e.g., the barrier layer 98) to become electrically conductive. In various examples, the coating 42 can include a top layer 100. The barrier layer 98 can be positioned between the thermo-resistive layer 46 and the top layer 100. The top layer 100 can include the presented surface 70 of the thermal plate 38. In some examples, the top layer 100 can include a vinyl ester resin, a polytetrafluoroethylene, and ceramic nanoparticles. In such examples, the ceramic nanoparticles can be present in the top layer 100 at a concentration that is between about 70% by weight of the top layer 100 and about 80% by weight of the top layer 100. For example, the ceramic nanoparticles can be present in the top layer 100 at a concentration that is at least about 70% by weight of the top layer 100, at least about 75% by weight of the top layer 100, about 80% by weight of the top layer 100, less than about 80% by weight of the top layer 100, and/or combinations or ranges thereof. The polytetrafluoroethylene can be present at a concentration of between about 6% by weight of the top layer 100 and about 10% by weight of the top layer 100. For example, the polytetrafluoroethylene can be present at a concentration of about 6% by weight of the top layer 100, about 7% by weight of the top layer 100, about 8% by weight of the top layer 100, about 9% by weight of the top layer 100, about 10% by weight of the top layer 100, and/or combinations or ranges thereof. The vinyl ester resin can be present in the top layer 100 at a balancing concentration by weight (i.e., making up the different to reach 100%). For example, the vinyl ester resin can be present at a concentration of between about 10% by weight of the top layer 100 and about 24% by weight of the top layer 100. In various examples, the vinyl ester resin can include titanium dioxide and/or zirconium dioxide. In employing the thermo-resistive layer 46 of the present disclosure, it has been found that power consumption attributed to the thermal plate 38 is decreased by about 2.5% to about 4.6% when compared to alternative compositions of the thermo-resistive layer 46. One specific alternative composition of the thermo-resistive layer 46 included ferrite and silicon.

Use of graphene nano-platelets in the thermo-resistive layer can be beneficial over alternative nanostructures. Graphene is a two-dimensional (2D) crystal and includes single graphite layer. Graphene nano-platelets, as used herein, refer to hybrid structures between graphene and graphite. Graphene nano-platelets have a planar structure, are light weight, have a high aspect ratio, are electrical conductivity, are low cost, and have good mechanical toughness. Pure graphene is not yet mass-produced. For Example, nano-flake powders are obtained following a liquid phase exfoliation procedure. Other techniques for obtaining graphene include ball-milling, the exposure of acid-intercalated graphite to microwave radiation, shear-exfoliation, and the wet-jet milling. Typically a large variety of powders in terms of thickness, lateral size of the flakes, aspect ratio, and defect concentrations is developed in the form of graphene nano-platelets. These graphene nano-platelets include single layer and few layer graphene mixed with nano-structure graphite. Accordingly, structurally, the graphene nano-platelets can exhibit properties that are between graphene and graphite. Typically, graphene nano-platelets are classified according to thickness, lateral size, and carbon to oxygen atomic ratio. With regard to morphological characteristics, the graphene family can be classified as single layer graphene, few layer graphene (2-10 layers), and graphite nano- and micro-platelets. A benefit of graphene nano-platelets is that graphene nano-platelets are less expensive than carbon nanofibers and carbon nanotubes. Additionally, graphene nano-platelets are comparable with carbon nanofibers and carbon nanotubes with regard to modifying mechanical properties of polymers. Further, the electrical conductivity of graphene nano-platelets can be orders of magnitude higher than the electrical conductivity of graphene oxides.

More specifically, graphene nano-platelets are ultrathin carbonic particles that may also be thought of as small stacks of graphene sheets made through manufacturing processes. The graphene nano-platelets are produced in various grades, which vary by average particle thickness and average particle diameter. Graphene nano-platelets of the present disclosure can provide particular electrical performance, thermal performance, barrier performance and/or mechanical performance to the thermo-resistive layer and/or the coating. Manufacturing processes relied upon for producing the graphene nano-platelets of the present disclosure are non-oxidizing, which can provide a pristine graphitic surface of carbon atoms with great planarity. These properties of the graphene nano-platelets provide a combination of performance enhancements in a single material.

The device disclosed herein is further summarized in the following paragraphs and is further characterized by combinations of any and all of the various aspects described therein.

According to an aspect of the present disclosure, a heating apparatus includes a body, a chamber, and a thermal plate. The chamber is defined by the body. The chamber includes an upper region and a lower region. The thermal plate provides heat to the chamber. The thermal plate includes a coating. The coating includes a thermo-resistive layer. The thermo-resistive layer includes a polymeric portion and a nanostructure portion. The thermal plate is positioned in at least one location chosen from the upper region and the lower region of the chamber.

According to another aspect, a thermo-resistive layer has a thickness that is between about 20 nm and about 60 nm.

According to yet another aspect, a thermal conductivity of a thermal plate is between about 0.20 W/mK and about 0.90 W/mK.

According to another aspect, a thermo-resistive layer receives power from a power source and the thermo-resistive layer reaches a temperature of at least 350°C in less than two minutes from initially receiving power from the power source.

According to yet another aspect, a polymeric portion of a thermo-resistive layer includes a two-part liquid silicone rubber.

According to another aspect, a nanostructure portion of a thermo-resistive layer includes graphene nano-platelets.

According to yet another aspect, a thickness of graphene nano-platelets in a nano-structure portion of a thermo-resistive layer is in the range of about 0.25 nm to about 12.5 nm.

According to another aspect, a coating on a thermal plate includes a top layer that includes a vinyl ester resin, a polytetrafluoroethylene, and ceramic nanoparticles.

According to yet another aspect, ceramic nanoparticles in a top layer of a coating on a thermal plate are present at a concentration of between about 70% by weight of the top layer and about 80% by weight of the top layer, the polytetrafluoroethylene is present in the top layer of the coating on the thermal plate at a concentration between about 6% by weight of the top layer and about 10% of the top layer, and the vinyl ester resin is present in the top layer of the coating on the thermal plate at a balancing concentration for the top layer.

According to another aspect, a coating on a thermal plate includes a barrier layer that is positioned between a top layer and a thermo-resistive layer.

According to yet another aspect, a barrier layer is configured to withstand a dielectric breakdown voltage of at least about 1,500 volts.

According to another aspect, a coating on a thermal plate includes a primer layer that is positioned between a substrate of the thermal plate and a thermo-resistive layer.

According to yet another aspect, a resistance of a thermo-resistive layer is in the range of about 30,000 ohms to about 60,000 ohms when operated at 110 volts.

According to yet another aspect, a thermal plate includes a substrate and the substrate includes aluminum.

According to another aspect, a fan circulates air within a chamber.

According to yet another aspect, a surface area of a thermo-resistive layer substantially corresponds with a surface area of a presented surface of a thermal plate.

According to still another aspect of the present disclosure, a heating apparatus includes a body, a chamber, and a thermal plate. The chamber is defined by the body. The chamber includes an upper region and a lower region. The thermal plate provides heat to the chamber. The thermal plate includes a coating. The coating includes a thermo-resistive layer. The thermo-resistive layer includes a polymeric portion and a nanostructure portion. The thermo-resistive layer has a thickness that is between about 20 nm and about 60 nm. A thermal conductivity of the thermal plate is between about 0.20 W/mK and about 0.90 W/mK. The thermal plate is positioned in at least one location chosen from the upper region and the lower region of the chamber.

According to another aspect, a thermo-resistive layer receives power from a power source and the thermo-resistive layer reaches a temperature of at least 350°C in less than two minutes from initially receiving power from the power source.

According to yet another aspect, a polymeric portion of a thermo-resistive layer includes a two-part liquid silicone rubber, a nanostructure portion of the thermo-resistive layer includes graphene nano-platelets, and a thickness of the graphene nano-platelets is in the range of about 0.25 nm to about 12.5 nm.

According to another aspect, a fan circulates air within a chamber.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, layouts, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A heating apparatus (10), comprising:
a body (14);
a chamber (18) defined by the body (14), wherein the chamber (18) comprises an upper region (30) and a lower region (34); and
a thermal plate (38) that provides heat to the chamber (18), wherein the thermal plate (38) comprises a coating (42), wherein the coating (42) comprises a thermo-resistive layer (46), wherein the thermo-resistive layer (46) comprises a polymeric portion and a nanostructure portion, and wherein the thermal plate (38) is positioned in at least one location chosen from the upper region (30) and the lower region (34) of the chamber (18).

2. The heating apparatus (10) as in claim 1, wherein the thermo-resistive layer (46) has a thickness (86) that is between about 20 nm and about 60 nm.

3. The heating apparatus (10) as in any of the preceding claims, wherein a thermal conductivity of the thermal plate (38) is between about 0.20 W/mK and about 0.90 W/mK.

4. The heating apparatus (10) as in any of the preceding claims, wherein the thermo-resistive layer (46) receives power from a power source (78), and wherein the thermo-resistive layer (46) reaches a temperature of at least 350°C in less than two minutes from initially receiving power from the power source (78).

5. The heating apparatus (10) as in any of the preceding claims, wherein the polymeric portion comprises a two-part liquid silicone rubber.

6. The heating apparatus (10) as in any of the preceding claims, wherein the nanostructure portion comprises graphene nano-platelets (90).

7. The heating apparatus (10) of claim 6, wherein a thickness (92) of the graphene nano-platelets (90) is in the range of about 0.25 nm to about 12.5 nm.

8. The heating apparatus (10) as in any of the preceding claims, wherein the coating (42) on the thermal plate (38) comprises:
a top layer (100) that comprises a vinyl ester resin, a polytetrafluoroethylene, and ceramic nanoparticles.

9. The heating apparatus (10) of claim 8, wherein the ceramic nanoparticles are present at a concentration of between about 70% by weight of the top layer (100) and about 80% by weight of the top layer (100), wherein the polytetrafluoroethylene is present at a concentration between about 6% by weight of the top layer (100) and about 10% of the top layer (100), and wherein the vinyl ester resin is present at a balancing concentration for the top layer (100).

10. The heating apparatus (10) of claim 8, wherein the coating (42) on the thermal plate (38) comprises a barrier layer (98) that is positioned between the top layer (100) and the thermo-resistive layer (46).

11. The heating apparatus (10) of claim 10, wherein the barrier layer (98) is configured to withstand a dielectric breakdown voltage of at least about 1,500 volts.

12. The heating apparatus (10) as in any of the preceding claims, wherein the coating (42) on the thermal plate (38) comprises a primer layer (74) that is positioned between a substrate (62) of the thermal plate (38) and the thermo-resistive layer (46).

13. The heating apparatus (10) as in any of the preceding claims, wherein a resistance of the thermo-resistive layer (46) is in the range of about 30,000 ohms to about 60,000 ohms when operated at 110 volts.

14. The heating apparatus (10) as in any of claims 1-11 and 13, wherein the thermal plate (38) comprises a substrate (62), and wherein the substrate (62) comprises aluminum.

15. The heating apparatus (10) as in any of the preceding claims, wherein a surface area of the thermo-resistive layer (46) substantially corresponds with a surface area of a presented surface (70) of the thermal plate (38).
